# EUROPÄISCHE PATENTSCHRIFT

(11) **EP 3 800 826 B1**
(45) Veröffentlichungstag und Bekanntmachung des Hinweises auf die Patenterteilung: **25.01.2023**
(21) Anmeldenummer: 19200989.2
(22) Anmeldetag: 02.10.2019
(51) Int. Cl.: H04L 9/32, H04L 9/40, H04L 67/12, G06Q 30/06

(54) **VERFAHREN UND SYSTEM ZUR VERTEILTEN ZUWEISUNG VON ERTRÄGEN EINER ANLAGE AN MEHRERE BETEILIGTE PERSONEN**
METHOD AND SYSTEM FOR THE DISTRIBUTED ASSIGNMENT OF REVENUE FROM A SYSTEM TO SEVERAL PERSONS INVOLVED
PROCÉDÉ ET SYSTÈME D'ATTRIBUTION RÉPARTIE DES RENDEMENTS D'UN PLACEMENT À UNE PLURALITÉ DE PERSONNES IMPLIQUÉES

(43) Veröffentlichungstag der Anmeldung: 07.04.2021
(73) Patentinhaber: Youki GmbH, 92224 Amberg (DE)
(72) Erfinder: STOUSSAVLJEWITSCH, Martin, 92284 Poppenricht (DE); STOUSSAVLJEWITSCH, Michael, 92284 Poppenricht (DE)
(74) Vertreter: Wolf, Gerhard

(56) Entgegenhaltungen:
- EP-A1- 3 460 942
- WO-A1-2019/094828
- US-A1- 2019 287 175
- Melanie Swan: "Blockchain: Blueprint for a New Economy" In: "Blockchain: Blueprint for a New Economy", 8. Februar 2015 (2015-02-08), O'Reilly, XP055279098, ISBN: 978-1-4919-2049-7 * sections "DAOS and Self-Bootstrapped Organizations" and "Automatic Markets and Tradenets"; Seiten 25-26 *

## Beschreibung

Die Erfindung betrifft ein Verfahren sowie ein System zur verteilten Zuweisung von Erträgen einer Energie erzeugenden Anlage an mehrere beteiligte Personen.

Die Anzahl von stromerzeugenden Anlagen, insbesondere Photovoltaikanlagen, Windkraftwerke etc. ist in der jüngeren Vergangenheit stark gestiegen. Förderungen und Erträge dieser Anlagen bieten für Investoren lohnende Investmentmöglichkeiten.

Nachteilig dabei ist, dass eine stromerzeugende Anlage meist mit hohen Investitionskosten verbunden ist, die oft von einem Kleinanleger allein nicht getragen werden können. Es besteht zwar grundsätzlich die Möglichkeit, sich über Zwischenhändler an einer solchen Anlage zu beteiligen. Diese indirekte Form der Beteiligung ist jedoch relativ kostspielig, da die Zwischenhändler die Dienstleistungen gegen Gebühr anbieten und dadurch ein erheblicher Anteil der erwirtschafteten Erträge verloren geht. Zudem ist diese indirekte Beteiligung für die Investoren intransparent.

Die Druckschrift EP 3 460 942 A1 offenbart ein Smart Power Meter.

Die Druckschrift WO2019/094828 A1 offenbart ein computerbasiertes Verfahren zur Erzeugung und Verteilung von Kryptovermögen. Ausgehend hiervon ist es Aufgabe der Erfindung, ein Verfahren sowie ein System zur Zuweisung von Erträgen einer insbesondere stromerzeugenden Anlage an mehrere beteiligte Personen anzugeben, das eine direkte Beteiligung von Investoren bei geringen Kosten und hoher Transparenz ermöglicht.

Die Aufgabe wird durch ein Verfahren gemäß den Merkmalen des unabhängigen Patentanspruchs 1 gelöst. Bevorzugte Ausführungsformen sind Gegenstand der Unteransprüche. Ein System zur Zuweisung von Erträgen einer stromerzeugenden Anlage an mehrere beteiligte Personen ist Gegenstand des nebengeordneten Patentanspruchs 13.

Gemäß einem ersten Aspekt bezieht sich die Erfindung auf ein Verfahren zur verteilten Zuweisung von Erträgen einer technischen Anlage, insbesondere einer energieerzeugenden Anlage, an mehrere beteiligte Personen basierend auf einem Netzwerk, das mehrere Smart-Meter Gateways umfasst. Das Verfahren weist folgende Schritte auf:
Zunächst werden Beteiligungsinformationen in einer Kette von kryptographisch miteinander verknüpften Datensätzen in dem Smart-Meter-Gateway-Netzwerk abgelegt. Die Kette von kryptographisch miteinander verknüpften Datensätzen ist insbesondere eine Blockchain. Die Beteiligungsinformationen enthalten Informationen hinsichtlich der Beteiligung einer Person an der Anlage, d.h. geben an, wer und in welcher Höhe zu einem gewissen Zeitpunkt an der Anlage beteiligt ist.

Zudem wird ein Smart-Contract in einer Kette von kryptographisch miteinander verknüpften Datensätzen in dem Smart-Meter-Gateway-Netzwerk abgelegt bzw. gehostet. Der Smart-Contract ist beispielsweise ein digitaler Vertrag. Dieser ist eindeutig der Anlage zugeordnet und enthält vorzugsweise alle zur Berechnung von Erträgen der Anlage nötige Anlagenparameter. Der Smart-Contract wird vorzugsweise einmalig in die Kette von kryptographisch miteinander verknüpften Datensätzen eingeschrieben und ist anschließend nicht mehr veränderbar, zumindest was die Parameter zur Identifizierung der Anlage und die Anzahl der auszugebenden Beteiligungstoken betrifft.

In einem weiteren Schritt werden Energieinformationen durch zumindest ein Smart-Meter Gateway empfangen, wobei die Energieinformationen angeben, welche Energiewerte bzw. Energiemengen durch die Anlage produziert wurden. Dieses Empfangen kann in definierten oder definierbaren Zeitintervallen erfolgen, beispielsweise alle 15, 10 oder 5 Minuten bis hin zu alle paar Sekunden. Es versteht sich, dass auch jegliche Zwischenwerte als mitoffenbart gelten sollen. Das Smart-Meter Gateway ist dabei vorzugsweise direkt dem Messaufnehmer, insbesondere dem Stromzähler, zugeordnet, durch den die von der Anlage produzierten Energiewerte bzw. Energiemengen gemessen werden. Das Smart-Meter Gateway, das die Energieinformationen empfängt, ist dabei Bestandteil des Smart-Meter-Gateway-Netzwerks.

Aus den empfangenen Energieinformationen können ggf. weitere Informationen abgeleitet werden, beispielsweise Informationen über die eingesparte Menge an CO2 im Falle einer Anlage zur Erzeugung von Strom aus erneuerbaren Energien. Basierend auf diesen weiteren Informationen können anschließend weitere Token erzeugt und an die beteiligten Personen ausgegeben werden.

Anschließend werden die empfangenen Energieinformationen oder davon abgeleitete Informationen in einer Kette von kryptographisch miteinander verknüpften Datensätzen, d.h. der Blockchain, in dem Smart-Meter-Gateway-Netzwerk abgespeichert. Dies erfolgt dadurch, dass mehrere Smart-Meter-Gateways zu der abzuspeichernden Energieinformationen einen Datenblock generieren und über einen Konsensmechanismus entschieden wird, welcher Datenblock der Vielzahl von generierten Datenblöcken in die Blockchain eingebunden wird.

Anschließend werden Ertragstoken berechnet. Die Berechnung basiert dabei auf den empfangenen Energieinformationen und dem Smart-Contract der Anlage. Der Smart-Contract enthält dabei vorzugsweise Informationen zur Berechnung des monetären Ertrags der Anlage pro erzeugtem Energiebetrag, beispielsweise in der Einheit EUR pro KWh im Falle einer stromerzeugenden Anlage. Dieser berechnete monetäre Ertrag lässt sich abhängig vom Wert eines Ertragstokens in eine Anzahl von Ertragstoken umrechnen.

Zuletzt wird ein Teil der Ertragstoken einer beteiligten Person zugeordnet, und zwar basierend auf den Beteiligungsinformationen. Die Beteiligungsinformationen geben den Grad der Beteiligung der Person an, beispielsweise mittels eines Prozentwerts. Die Beteiligungsinformationen entsprechen vorzugsweise dem Besitz von Beteiligungstoken, die der jeweiligen Anlage zugeordnet sind. Abhängig von diesen Beteiligungsinformationen kann der Anteil der Ertragstoken, der der jeweiligen beteiligten Person zusteht, berechnet werden. Diese Ertragstoken werden anschließend an eine Ertragswallet der beteiligten Person übermittelt.

Das erfindungsgemäße Verfahren bietet den entscheidenden Vorteil, dass durch das Smart-Meter-Gateway-Netzwerk und die Verwendung einer Kette von kryptographisch miteinander verknüpften Datensätzen zur Abspeicherung der Energieinformationen eine hochsichere Rechenumgebung geschaffen wird, basierend auf der eine sichere und hochgenaue Abrechnung der Anlagenerträge innerhalb eines nicht kompromittierbaren Smart-Contracts möglich ist. Zudem wird eine direkte Beteiligung an Anlagen durch Investoren ermöglicht, die mit geringen Fixkosten verbunden ist, aber trotzdem eine hohe Transparenz bietet.

In Bezug auf nähere technische Ausgestaltungen des Smart-Meter-Gateways sei auf die technische Richtlinie des Bundesamts für Sicherheit in der Informationstechnik (BSI) TR-03109-1, Version 1.0 verwiesen, die vollumfänglich zum Gegenstand der vorliegenden Offenbarung gemacht wird.

Gemäß einem Ausführungsbeispiel weist das Smart-Meter-Gateway-Netzwerk mehrere Smart-Meter Gateways auf, die an unterschiedlichen Orten installiert sind. Ein Smart-Meter Gateway ist vorzugsweise an der Anlage oder im engen örtlichen Bezug zu der Anlage installiert, die anderen Smart-Meter Gateways sind jedoch örtlich getrennt von dieser Anlage vorgesehen, beispielsweise an unterschiedlichen stromerzeugenden oder stromverbrauchenden Einrichtungen (z.B. Häusern, Kraftwerken, Photovoltaikanlagen, gewerblich genutzten Gebäuden etc.).

Gemäß einem Ausführungsbeispiel sind die Smart-Meter Gateways des Smart-Meter-Gateway-Netzwerks durch eine kryptographisch gesicherte Netzwerkverbindung miteinander gekoppelt. Dadurch wird eine sichere Kommunikation zwischen den Smart-Meter Gateways des Smart-Meter-Gateway-Netzwerks sichergestellt.

Gemäß einem Ausführungsbeispiel weist das Smart-Meter-Gateway-Netzwerk einen proof-of-stake-Konsensmechanismus zur Bestimmung, ob ein vorgeschlagener oder welcher der vorgeschlagenen Datenblöcke in die Kette von kryptographisch miteinander verknüpften Datensätzen eingebunden wird, auf. Ein proof-of-stake-Konsensmechanismus benötigt geringere Rechenressourcen zur Erzielung eines Konsenses als ein Proof-of-work-Konsensmechanismus. Da die Rechenleistung der Smart-Meter Gateways beschränkt ist, kann mittels eines proof-of-stake-Konsensmechanismus ein Konsens in geringerer Zeit erreicht werden. Alternativ können auch andere Konsensmechanismen verwendet werden, beispielsweise ein proof-of-work-Konsensmechanismus oder ein proof-ofauthority-Konsensmechanismus.

Gemäß einem Ausführungsbeispiel werden die Ertragstoken der jeweiligen Anlage eindeutig zugeordnet. In anderen Worten weist damit jede Anlage ihre eigenen Ertragstoken auf. Dadurch kann anhand des Ertragstokens allein bestimmt werden, von welcher Anlage der Ertragstoken stammt.

Gemäß einem Ausführungsbeispiel werden für einen definierten Abrechnungszeitraum Ertragstoken generiert und in einer der Anlage zugeordneten Anlagenertrags-Wallet abgelegt. Die Generierung der Ertragstoken erfolgt damit zunächst zentral, und zwar vorzugsweise innerhalb des Smart-Meter-Gateway-Netzwerks. Die Ertragstoken werden beispielsweise alle 24 Stunden abhängig von den empfangenen Energieinformationen, d.h. insbesondere den über den Abrechnungszeitraum aufsummierten Energiewerten, generiert und in der Anlagenertrags-Wallet zwischengespeichert. Von dieser Anlagenertrags-Wallet lassen sich dann die Ertragstoken beteiligungsabhängig verteilen. Vorzugsweise erfolgt eine automatische Ausschüttung der Ertragstoken durch den Smart-Contract abhängig von den Beteiligungstoken, die die jeweilige Person besitzt.

Gemäß einem Ausführungsbeispiel werden die Ertragstoken der Anlagenertrags-Wallet auf Ertrags-Wallets der beteiligten Personen verteilt, und zwar basierend auf den Beteiligungsinformationen. Dadurch kann abhängig vom Beteiligungsanteil eine Ertragsbeteiligung der beteiligten Personen bzw. Investoren erfolgen.

Gemäß einem Ausführungsbeispiel werden einer beteiligten Person gemäß deren Beteiligungsanteil Beteiligungstoken zugeordnet, die in einer Beteiligungs-Wallet abgelegt werden. Die Beteiligungstoken sind quasi frei handelbare Genussscheine, wobei jeder Beteiligungstoken einen gewissen Anlagewert widerspiegelt. Die Beteiligungstoken werden nach dem Erwerb einer Beteiligung an der Anlage einer Beteiligungs-Wallet der beteiligten Person gutgeschrieben. Die Beteiligungs-Wallet ist dabei vorzugsweise eindeutig der jeweiligen Anlage zugeordnet und nimmt weiterhin vorzugsweise ausschließlich zu dieser Anlage gehörende Beteiligungstoken auf.

Gemäß einem Ausführungsbeispiel werden die Ertrags-Wallet und die Beteiligungs-Wallet durch unterschiedliche Wallets gebildet. Dadurch ist es möglich, dass die die Anlagenbeteiligung widerspiegelnden Token von den die angesammelten Erträge der Anlage widerspiegelnden Token unterschieden werden können.

Alternativ können die Ertragstoken und die Beteiligungstoken auch einer einzigen Wallet zugeführt werden, und zwar insbesondere dann, wenn die Ertragstoken und die Beteiligungstoken durch eine eindeutige Kennung bzw. ID voneinander unterscheidbar sind.

Gemäß einem Ausführungsbeispiel sind die Beteiligungsinformationen direkter Bestandteil des Smart-Contracts oder der Smart-Contract enthält Informationen, die auf die Beteiligungsinformationen verweisen. Damit kann basierend auf dem Smart Contract die Zuweisung der Ertragstoken an die jeweiligen beteiligten Personen erfolgen.

Gemäß einem Ausführungsbeispiel enthält der Smart-Contract Anlagenparameter, die die Energie erzeugende Anlage charakterisieren und basierend auf denen das Berechnen der Ertragstoken erfolgt. Der Smart-Contract umfasst insbesondere einen Algorithmus oder eine Berechnungsformel, basierend auf der sich aus den empfangenen Energieinformationen, insbesondere den über einen Abrechnungszeitraum aufsummierten erzeugten Energiewerten, die Anzahl der zu erzeugenden Ertragstoken bestimmen lässt. Der Smart Contract ist dabei insbesondere auch in der im Smart-Meter-Gateway-Netzwerk gehaltenen Blockchain gespeichert.

Gemäß einem Ausführungsbeispiel umfassen die Anlagenparameter Informationen über die Vergütung der erzeugten Energie, technische Anlagenparameter und/oder monetäre Anlagenparameter. Informationen über die Vergütung können beispielsweise die Vergütung angeben, die gesetzlich (beispielsweise durch das EEG-Gesetz) für erneuerbare Energien gezahlt werden. Technische Anlagenparameter können beispielsweise Parameter zum Anlagenertrag (bspw. Ausrichtung Standort etc.), Laufzeit der Anlage, Parameter zur Degradation der Anlage etc. sein. Finanzielle Parameter können beispielsweise die Anzahl der ausgegebenen Beteiligungstoken, die Verteilung der Beteiligungstoken auf die beteiligten Personen, anfallende Fixkosten (beispielsweise für Wartung und Instandhaltung) etc. sein.

Gemäß einem weiteren Aspekt betrifft die Erfindung ein System zur verteilten Zuweisung von Erträgen einer Anlage an mehrere beteiligte Personen umfassend ein Netzwerk mit mehreren Smart-Meter Gateways, wobei ein Smart-Meter Gateway des Smart-Meter-Gateway-Netzwerks mit einem Messaufnehmer der Anlage gekoppelt ist, wobei das System dazu ausgebildet ist, die folgenden Abläufe durchzuführen:
- Abspeichern von Beteiligungsinformationen, die Informationen hinsichtlich der Beteiligung einer Person enthalten, in einer Kette von kryptographisch miteinander verknüpften Datensätzen in dem Smart-Meter-Gateway-Netzwerk;
- Ablegen eines Smart-Contracts in einer Kette von kryptographisch miteinander verknüpften Datensätzen in dem Smart-Meter-Gateway-Netzwerk, wobei der Smart-Contract eindeutig der Anlage zugeordnet ist und zur Berechnung von Erträgen der Anlage nötige Anlagenparameter enthält;
- Empfangen von durch die Anlage produzierten Energiewerten durch zumindest ein Smart-Meter Gateway von dem Messaufnehmer der Anlage, wobei das Smart-Meter Gateway Bestandteil des Smart-Meter-Gateway-Netzwerks ist;
- Abspeichern der empfangenen Energiewerte in einer Kette von kryptographisch miteinander verknüpften Datensätzen in dem Smart-Meter-Gateway-Netzwerk;
- Berechnen von Ertragstoken basierend auf den erfassten Energiewerten und dem Smart-Contract der Anlage; und
- Zuweisen eines Teils der Ertragstoken zu einer beteiligten Person basierend auf den Beteiligungsinformationen.

Gemäß einem Ausführungsbeispiel des Systems ist eine Schnittstelle zum Empfang von Beteiligungsinformationen vorgesehen. Über diese Schnittstelle kann dem System mitgeteilt werden, dass sich die Beteiligungsverhältnisse an der Anlage geändert haben, beispielsweise in der Form, dass die erstmals ausgegebenen Beteiligungstoken von einem Investor erworben wurden oder diese Beteiligungstoken von einem Investor auf einen anderen Investor übertragen wurden.

Gemäß einem Ausführungsbeispiel ist eine Schnittstelle zur Weiterleitung von Ertragstoken von einer Anlagenertrags-Wallet auf Ertrags-Wallets der beteiligten Personen vorgesehen. Über diese Schnittstelle können die Ertragstoken abhängig vom aktuellen Beteiligungsverhältnis verteilt werden.

Unter "Energie erzeugende Anlage" im Sinne der vorliegenden Erfindung werden jegliche Anlagen zur Gewinnung von Energie, insbesondere elektrischer Energie, verstanden. Dies sind beispielsweise Photovoltaikanlagen, Waste to Energy-Anlagen, d.h. Anlagen, die eine thermische Verwertung des Abfalls zur Erzeugung von elektrischer oder thermischer Energie vornehmen, etc. Unter "erzeugter Energie" kann auch ein Energieumwandlungsprozess fallen.

Unter "Personen" im Sinne der vorliegenden Erfindung werden sowohl natürliche Personen als auch juristische Personen verstanden.

Unter "Smart-Contract" im Sinne der vorliegenden Erfindung wird ein Computerprotokoll oder eine durch einen Prozessor ausführbare Software verstanden, der/die einen Vertrag abbildet. Ein smart-contract bildet dabei die Logik vertraglicher Regelungen mit technischen Mitteln (insbesondere durch geeigneten ausführbaren Code) ab.

Unter "Ertragstoken" im Sinne der vorliegenden Erfindung werden Token verstanden, die ausgehend von dem Ertrag, beispielsweise dem monetären Ertrag der Anlage ausgegeben werden. In anderen Worten spiegeln die Ertragstoken den finanziellen Anspruch aus dem Energieertrag der Anlage wider.

Unter "Beteiligungstoken" im Sinne der vorliegenden Erfindung werden Token verstanden, die im Gegenzug zu einer Beteiligung einer Person an der Anlage ausgegeben werden. In anderen Worten wird über die Beteiligungstoken die Beteiligung der Person an der Anlage bzw. der Investition in die Anlage verbrieft.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft eine schematische Darstellung einer Energie erzeugenden Anlage, die mit einem Messaufnehmer und einem Smart-Meter-Gateway gekoppelt ist;
- Fig. 2: beispielhaft eine schematische Darstellung einer Energie erzeugenden Anlage, die über ein Smart-Meter-Gateway-Netzwerk mit einem die Erträge der Investoren hostenden Netzwerk verbunden ist;
- Fig. 3: beispielhaft ein Blockschaltbild eines Systems zur verteilten Zuweisung von Erträgen einer Anlage an mehrere beteiligte Personen; und
- Fig. 4: beispielhaft ein Ablaufdiagramm, das die Schritte eines Verfahrens zur verteilten Zuweisung von Erträgen einer Anlage an mehrere beteiligte Personen veranschaulicht.

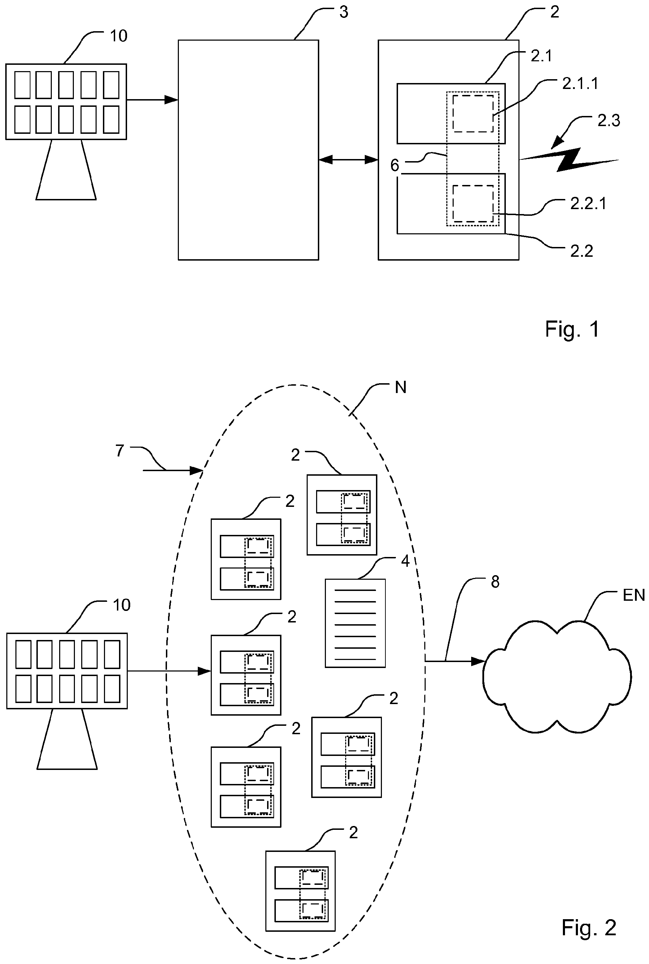

In Figur 1 ist beispielhaft und grob schematisch ein mit einem Messaufnehmer 3 gekoppeltes Smart-Meter-Gateway 2 gezeigt, das Messdaten von dem Messaufnehmer 3, beispielsweise einem Stromzähler, empfängt, diese speichert und ggf. aufbereitet, um die Messdaten oder davon abgeleitete Informationen (beispielsweise durch eine Weiterverarbeitung der Messdaten) an einen Informationsempfänger weiterzuleiten. Derartige Informationsempfänger können beispielsweise eine Abrechnungsstelle, ein Versorgungsunternehmen etc. sein. Somit bildet das Smart-Meter-Gateway 2 ein Gateway für die Kommunikation des Messaufnehmers 3 nach außen.

Das Smart-Meter-Gateway 2 ist vorzugsweise in unmittelbarer örtlicher Nähe zu dem Messaufnehmer 3 angeordnet. Das Smart-Meter-Gateway 2 kann beispielsweise in einer Verbrauchsstelle, insbesondere einem Gebäude, vorgesehen sein, in dem sich auch der Messaufnehmer 3 befindet. Alternativ kann der Messaufnehmer 3 und das Smart-Meter-Gateway 2 einer energieerzeugenden Anlage zugeordnet sein, um die von der Anlage erzeugte Energie zu bestimmen und Informationen über diese erzeugte Energie nach außen zu kommunizieren.

Das Smart-Meter-Gateway 2 weist zumindest einen Prozessor 2.1 zur Durchführung von Rechenoperationen und eine Speichereinheit 2.2 für die Abspeicherung von Daten auf.

Für die verteilte Zuweisung von Erträgen einer Anlage 10 an mehrere beteiligte Personen 5 und die dafür notwendige Berechnung und Abspeicherung von Datensätzen ist ein gekapselter Bereich 6 vorgesehen, der in Figur 1 durch ein punktiert gezeichnetes Rechteck dargestellt ist. Dieser gekapselte Bereich 6 bildet eine sog. "sandbox", d.h. einen isolierten Bereich, so dass die Rechen- und Speicherprozesse in diesem gekapselten Bereich 6 keine Auswirkungen auf die übrigen Prozesse (beispielsweise Erfassung und Auswertung von Messdaten) haben, die außerhalb des gekapselten Bereichs 6 durch das Smart-Meter-Gateway 2 abgearbeitet werden.

Dem gekapselten Bereich 6 können insbesondere ein Prozessorbereich 2.1.1 des Prozessors 2.1 und ein Speicherbereich 2.2.1 der Speichereinheit 2.2 zugewiesen sein, so dass der gekapselte Bereich 6 grundsätzlich auf die gleiche Hardware zugreift, die auch für die übrigen in der Smart-Meter-Gateway 2 verarbeiteten Prozesse (beispielsweise Erfassung und Auswertung von Messdaten) verwendet werden. Jedoch wird eine virtuelle Trennung dadurch erreicht, dass dem gekapselten Bereich 6 beispielsweise ein anderer Prozessorbereich 2.1.1 (beispielsweise ein Prozessorkern eines Mehrkernprozessors) und ein anderer Speicherbereich 2.2.1 (andere Speicheradressen) zugewiesen sind als den übrigen in der Smart-Meter-Gateway 2 verarbeiteten Prozessen. In anderen Worten wird demnach eine virtuelle Kapselung für die Prozesse zur Transaktionsdurchführung erreicht.

Alternativ kann der gekapselte Bereich 6 einen eigenen Prozessor und eine eigene Speichereinheit aufweisen, auf die die übrigen in dem Smart-Meter-Gateway 2 verarbeiteten Prozesse (beispielsweise Erfassung und Auswertung von Messdaten) keinen Zugriff haben, so dass anstelle einer virtuellen Trennung eine physische Trennung erreicht wird.

Beispielsweise kann der gekapselte Bereich 6 als aufsteckbares Modul ausgebildet sein und mit dem Smart-Meter-Gateway 2 durch Aufstecken zum Austausch von Informationen gekoppelt sein. Der Austausch von Informationen über die Schnittstelle erfolgt bevorzugt verschlüsselt. Weiterhin vorzugsweise erfolgt der Austausch von Informationen über eine HAN/CLS-Schnittstelle (HAN: Home Area Network; CLS: Controllable Local System). Durch das Aufstecken kann vorzugsweise auch die energetische Versorgung des Moduls sichergestellt werden. Vorzugsweise erfolgt auch eine Authentifizierung des aufsteckbaren Moduls gegenüber dem Smart-Meter-Gateway 2. Weiterhin vorzugsweise wird durch das Aufstecken auch die mechanische Fixierung des Moduls an dem Smart-Meter-Gateway 2 erreicht. Die Schnittstelle zur Versorgung des Moduls mit Informationen und Energie kann insbesondere durch eine länglich ausgebildete Kontaktleiste gebildet sein.

Das gekapselte Modul kann eine TCP/IP-basierte Schnittstelle bereitstellen, über die Drittgeräte mit dem Smart-Meter-Gateway 2 gekoppelt werden können. Insbesondere können über diese TCP/IPbasierte Schnittstelle mehrere an unterschiedlichen Orten aufgestellte Smart-Meter-Gateways 2 zu einem Smart-Meter-Gateway-Netzwerk N zusammengefasst werden, um Transaktionen durchzuführen.

Der gekapselte Bereich 6 kann, abhängig von der Konfiguration des Smart-Meter-Gateways 2 auch Messdaten oder von Messdaten abgeleitete Informationen empfangen. Dies kann beispielsweise über einen internen Datenaustausch in dem Smart-Meter-Gateway 2 zwischen dem gekapselten Bereich 6 und einem vom gekapselten Bereich 6 virtuell oder physisch getrennten Bereich erfolgen. Ein direkter Zugriff auf Speicherbereiche, in denen die Messdaten oder von Messdaten abgeleitete Informationen gespeichert sind, ist aus dem gekapselten Bereich 6 heraus vorzugsweise nicht möglich.

Des Weiteren weist die das Smart-Meter-Gateway 2 eine Kommunikationsschnittstelle 2.3 auf, über die durch das Smart-Meter-Gateway 2 Daten versendet und empfangen werden können.

Das Smart-Meter-Gateway 2 ist dazu konfiguriert, einen oder mehrere Datensätze zu berechnen, die Informationen enthalten, basierend auf denen die verteilte Zuweisung von Erträgen erfolgt. Die Informationen können sich beispielsweise auf die von der Anlage 10 erzeugten Energiewerte, auf Beteiligungsinformationen, auf Ertragstoken etc. beziehen. Ein Datensatz ist insbesondere ein Datenblock, der in eine Kette von Datensätzen eingebunden werden soll, und zwar derart, dass die Datensätze untereinander kryptographisch verkettet sind, um die Authentizität der Kette von Datensätzen zu gewährleisten.

Ein Datensatz kann beispielsweise eine kryptographisch verschlüsselte Information eines in der Datensatz-Kette vorhergehenden, insbesondere unmittelbar vorherigen Datensatzes (beispielsweise einen Hashwert des gesamten Datensatzes oder eines Teils davon), die Transaktionsdaten und vorzugsweise einen Zeitstempel aufweisen, der angibt, zu welchem Zeitpunkt der Datensatz generiert wurde.

Zur Erzeugung des Zeitstempels kann das Smart-Meter-Gateway 2 Zugriff auf eine Uhr haben. Dies kann insbesondere eine Atomuhr sein, so dass das Smart-Meter-Gateway 2 beispielsweise einen Zeitstempel basierend auf der Internationalen Atomzeit (TAI) generieren kann. Dadurch wird eine hochgenaue zeitliche Kennzeichnung der Datensätze ermöglicht.

Fig. 2 veranschaulicht die Einbindung des Smart-Meter-Gateways 2, das mit der Energie erzeugenden Anlage 10 gekoppelt ist, in ein Smart-Meter-Gateway-Netzwerk N. Das Smart-Meter-Gateway-Netzwerk N umfasst eine Vielzahl von Smart-Meter-Gateways 2, die an unterschiedlichen Orten installiert sind, wobei eines der Smart-Meter-Gateways 2 mit der Energie erzeugenden Anlage 10 zur Erfassung deren erzeugter Energie gekoppelt ist. Die anderen Smart-Meter-Gateways 2 sind mit weiteren

Messaufnehmern 3 gekoppelt, beispielsweise mit Stromzählern in Häusern, Betrieben, oder auch anderen Energieerzeugungsanlagen. Die Smart-Meter-Gateways 2 des Smart-Meter-Gateway-Netzwerks N sind untereinander über eine sichere Netzwerkverbindung gekoppelt, so dass diese Daten untereinander austauschen können. Das Smart-Meter-Gateway-Netzwerk N ist dabei insbesondere als sog. Blockchain-Netzwerk ausgebildet, d.h. die Smart-Meter-Gateways 2 des Smart-Meter-Gateway-Netzwerks N speichern jeweils eine Kette von kryptographisch miteinander verknüpften Datensätzen (sog. Blockchain). Zudem sind die Smart-Meter-Gateways 2, wie zuvor beschrieben, dazu ausgebildet, in die Blockchain einzubindende Datensätze zu berechnen. Vorzugsweise werden in die Blockchain einzubindende Datensätze von mehreren Smart-Meter-Gateways 2 parallel berechnet und es wird über einen Konsensmechanismus entschieden, welcher Datensatz der Vielzahl von generierten Datensätzen in die Blockchain eingebunden wird. Hierbei nutzt das Smart-Meter-Gateway-Netzwerk N vorzugsweise einen proof-of-stake-Konsensmechanismus, um im Vergleich zu einem proof-of-work-Konsens einen rechenressourcensparenden Konsens zu erreichen.

In dem Smart-Meter-Gateway-Netzwerk N ist ferner ein sog. smart contract 4 gespeichert. Ein smart contract 4 ist ein in der Blockchain abgespeicherter, digitaler Vertrag, in dem zur Berechnung von Erträgen der Anlage 10 notwendige Parameter abgelegt sind. Ferner kann über den smart contract 4 festgelegt sein, beim Eintritt welcher Bedingungen bestimmte Vorgänge ausgelöst werden, z.B. wann die von der Anlage 10 erzeugten Energiewerte ermittelt und in der Blockchain abgespeichert werden bzw. wann und basierend auf welchen Parametern die Erträge der Anlage ermittelt werden.

In dem smart contract 4 können ferner Beteiligungsinformationen hinterlegt sein oder der smart contract 4 kann Informationen enthalten, die auf Beteiligungsinformationen verweisen (z.B. einen Zeiger auf einen Speicherbereich, in dem die Beteiligungsinformationen hinterlegt sind).

Das Smart-Meter-Gateway-Netzwerk N weist eine Schnittstelle 7 auf, über die das Smart-Meter-Gateway-Netzwerk N Beteiligungsinformationen empfangen kann. Zudem ist eine Schnittstelle 8 vorgesehen, über die Informationen hinsichtlich der an die beteiligten Personen 5 zu verteilenden Erträge bzw. Ertragstoken von dem Smart-Meter-Gateway-Netzwerk N an ein Netzwerk EN übertragen werden, in dem Ertrags-Wallets der beteiligten Personen 5 bzw. Investoren gehostet sind. Über diese Schnittstelle 8 können dann die Erträge bzw. Ertragstoken übertragen und auf den Konten bzw. Ertrags-Wallets 5.1 der beteiligten Personen 5 gutgeschrieben werden.

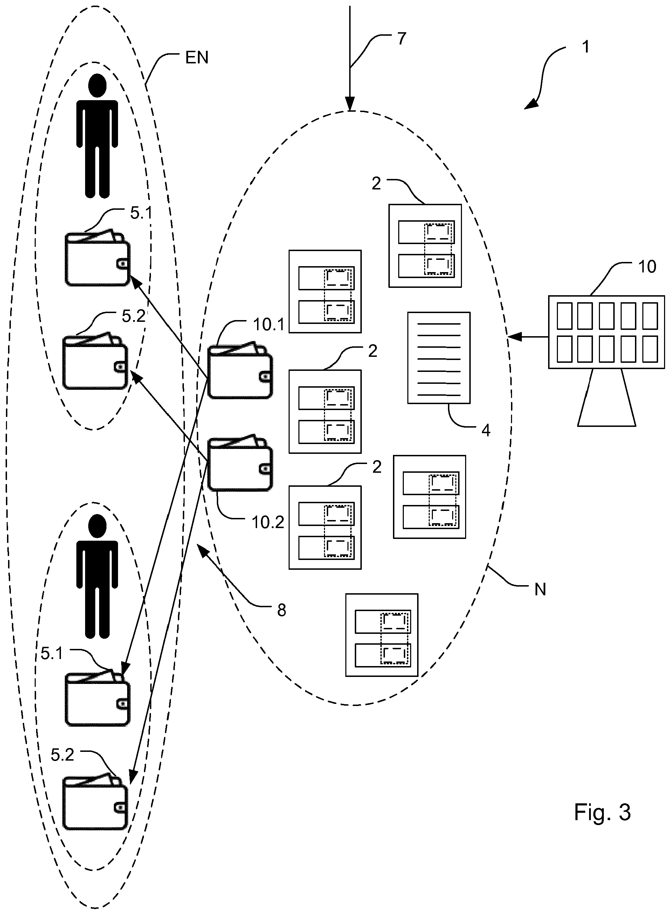

Fig. 3 zeigt das System 1 zur verteilten Zuweisung von Erträgen einer Anlage 10 an mehrere beteiligte Personen 5 mehr im Detail. In der von dem Smart-Meter-Gateway-Netzwerk N gespeicherten Blockchain sind vorzugsweise Beteiligungsinformationen gespeichert, die angeben, welche Personen an der Anlage 10, dem dieses Smart-Meter-Gateway-Netzwerk N zugeordnet ist, beteiligt sind. Das Smart-Meter-Gateway-Netzwerk N hostet hierbei beispielweise eine Anlagenbeteiligungs-Wallet 10.2, in die zu einem gewissen Zeitpunkt, beispielsweise bei Inbetriebnahme der Anlage 10 oder bei Beginn des Beteiligungsmodells an der Anlage 10, Beteiligungstoken abgelegt werden. Die Summe aller Beteiligungstoken entspricht dem Gesamtbeteiligungswert der Anlage 10. Wenn beispielsweise eine Beteiligung an einer Anlage 10 mit einem Wert von 1 Mio. EUR vergeben wird und hierzu zehntausend Beteiligungstoken à 100,- EUR ausgegeben werden, werden an die Anlagenbeteiligungs-Wallet 10.2 zunächst zehntausend Beteiligungstoken übertragen, und zwar vorzugsweise über die Schnittstelle 7.

Aus der Anlagenbeteiligungs-Wallet 10.2 können anschließend Beteiligungstoken an die Beteiligungs-Wallets 5.2 der Personen 5 übertragen werden, und zwar je nach Beteiligungsgrad der jeweiligen Person 5. Beteiligt sich beispielsweise eine Person 5 mit einem Betrag von tausend Euro an der Anlage 10, werden zehn Beteiligungstoken à 100,- EUR an deren Beteiligungs-Wallet 5.2 übertragen. Die Übertragung der Beteiligungstoken von der Anlagenbeteiligungs-Wallet 10.2 an die Beteiligungs-Wallets 5.2 erfolgt über die Schnittstelle 8.

Zur gesicherten Speicherung der Beteiligungsinformationen werden die Beteiligungs-Wallets 5.2 und/oder die Anlagenbeteiligungs-Wallet 10.2 selbst oder die Verteilung der Beteiligungstoken auf die Beteiligungs-Wallets 5.2 bzw. die Anlagenbeteiligungs-Wallet 10.2 in der Blockchain gespeichert.

Basierend auf den durch die Anlage 10 generierten Erträgen werden Ertragstoken erzeugt und in der Anlagenertrags-Wallet 10.1 abgelegt. Dies erfolgt vorzugsweise in dem Smart-Meter-Gateway-Netzwerk N, und zwar basierend auf Informationen, die in dem Smart-Contract 4 abgelegt sind. Der Smart-Contract 4 umfasst vorzugsweise zumindest eine Rechenvorschrift, die Anlagenparameter umfasst, die die jeweilige Anlage 10 charakterisieren. Die Anlagenparameter sind insbesondere wirtschaftliche Rahmenparameter, basierend auf denen sich der an die beteiligten Personen auszuschüttende Ertrag der Anlage 10 ergibt.

Vorzugsweise ist das Smart-Meter-Gateway-Netzwerk N, die Anlagenbeteiligungs-Wallet 10.2 und die Anlagenertrags-Wallet 10.1 eindeutig einer einzigen Anlage 10 zugeordnet. Gleiches gilt vorzugsweise auch für den Smart-Contract 4, der in dem Smart-Meter-Gateway-Netzwerk N gehostet ist.

Wie zuvor beschrieben, werden die von der Anlage 10 erzeugten Energiewerte zeitlich nacheinander zu bestimmten Zeitpunkten, insbesondere in einem definierten Zeittakt, beispielsweise im 15-Minuten-Takt protokolliert und in der Blockchain im Smart-Meter-Gateway-Netzwerk N gespeichert. Nach einem gewissen Zeitraum, beispielsweise nach 24 Stunden, wird basierend auf dem Smart-Contract 4 eine Berechnung der erwirtschafteten Erträge vollzogen. Basierend auf diesen berechneten Erträgen werden anschließend Ertragstoken erzeugt und in der Anlagenertrags-Wallet 10.1 abgelegt.

Anschließend erfolgt die Übertragung der Ertragstoken aus der Anlagenertrags-Wallet 10.1 an die Ertrags-Wallets 5.1 der beteiligten Personen 5, und zwar basierend auf den Beteiligungsinformationen. Wenn beispielsweise eine Person 5 mit einem Beteiligungsgrad von 1 % an der Anlage beteiligt ist, erfolgt eine Zugweisung von 1 % der Ertragstoken aus der Anlagenertrags-Wallet 10.1 an die Ertrags-Wallet 5.1 dieser beteiligten Person 5.

Die Übertragung der Beteiligungstoken von der Anlagenertrags-Wallet 10.1 an die Ertrags-Wallets 5.1 erfolgt über die Schnittstelle 8.

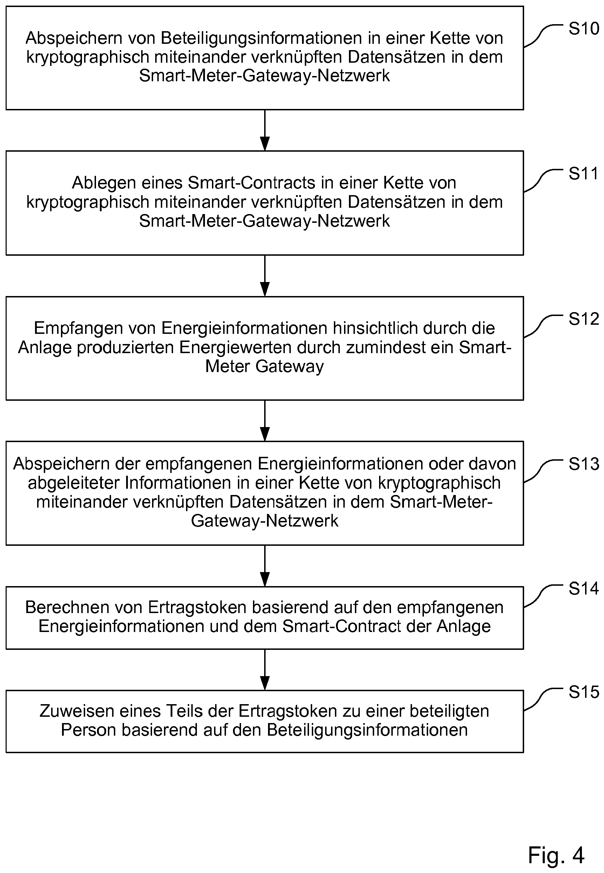

Fig. 4 zeigt schematisch die Verfahrensschritte eines Verfahrens zur verteilten Zuweisung von Erträgen einer Anlage 10 an mehrere beteiligte Personen 5 basierend auf einem Netzwerk N umfassend mehrere Smart-Meter Gateways 4.

Zunächst werden Beteiligungsinformationen, die Informationen hinsichtlich der Beteiligung einer Person 5 an der Anlage 10 enthalten, in einer Kette von kryptographisch miteinander verknüpften Datensätzen, d.h. einer Blockchain, in dem Smart-Meter-Gateway-Netzwerk N abgespeichert (S10).

Zudem erfolgt ein Ablegen bzw. Hosting eines Smart-Contracts in der Kette von kryptographisch miteinander verknüpften Datensätzen, d.h. der Blockchain, in dem Smart-Meter-Gateway-Netzwerk N. Der Smart-Contract 4 ist eindeutig der Anlage 10 zugeordnet und enthält zur Berechnung von Erträgen der Anlage 10 nötige Anlagenparameter (S11).

Anschließend werden Energieinformationen hinsichtlich durch die Anlage 10 produzierten Energiewerten durch zumindest ein Smart-Meter Gateway 2 empfangen, wobei das Smart-Meter Gateway 2 Bestandteil des Smart-Meter-Gateway-Netzwerks N ist (S12).

Diese empfangenen Energieinformationen oder davon abgeleitete Informationen werden in einer Kette von kryptographisch miteinander verknüpften Datensätzen, d.h. der Blockchain, in dem Smart-Meter-Gateway-Netzwerk N abgespeichert (S13).

Basierend auf den empfangenen Energieinformationen und dem Smart-Contract 4 der Anlage 10 werden anschließend Ertragstoken berechnet (S14).

Basierend auf den Beteiligungsinformationen wird zuletzt ein Teil der Ertragstoken einer beteiligten Person 5 zugewiesen (S15).

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegend Erfindungsgedanke verlassen wird.

### Bezugszeichenliste

- 1: System
- 2: Smart-Meter-Gateway
- 2.1: Prozessor
- 2.1.1: Prozessorbereich
- 2.2: Speichereinheit
- 2.2.1: Speicherbereich
- 2.3: Kommunikationsschnittstelle
- 3: Messaufnehmer
- 4: Smart Contract
- 5: Person
- 5.1: Ertrags-Wallet
- 5.2: Beteiligungs-Wallet
- 6: gekapselter Bereich
- 7: Schnittstelle
- 8: Schnittstelle
- 10: Anlage
- 10.1: Anlagenertrags-Wallet
- 10.2: Anlagenbeteiligungs-Wallet

- N: Smart-Meter-Gateway-Netzwerk
- EN: Netzwerk

## Patentansprüche

1. Verfahren zur verteilten Zuweisung von Erträgen einer Anlage (10) an mehrere beteiligte Personen (5) basierend auf einem Smart-Meter-Gateway-Netzwerk (N) umfassend mehrere Smart-Meter Gateways (2), wobei das Verfahren folgende Schritte aufweist:
- Abspeichern von Beteiligungsinformationen, die Informationen hinsichtlich der Beteiligung einer Person (5) an der Anlage (10) enthalten, in einer Kette von kryptographisch miteinander verknüpften Datensätzen in dem Smart-Meter-Gateway-Netzwerk (N) (S10);
- Ablegen eines Smart-Contracts (4) in einer Kette von kryptographisch miteinander verknüpften Datensätzen in dem Smart-Meter-Gateway-Netzwerk (N), wobei der Smart-Contract (4) eindeutig der Anlage (10) zugeordnet ist und zur Berechnung von Erträgen der Anlage (10) nötige Anlagenparameter enthält (S11);
- Empfangen von Energieinformationen hinsichtlich durch die Anlage (10) produzierten Energiewerten durch zumindest ein Smart-Meter Gateway (2), wobei das Smart-Meter Gateway (2) Bestandteil des Smart-Meter-Gateway-Netzwerks (N) ist (S12);
- Abspeichern der empfangenen Energieinformationen oder davon abgeleiteter Informationen in einer Kette von kryptographisch miteinander verknüpften Datensätzen in dem Smart-Meter-Gateway-Netzwerk (N) (S13);
- Berechnen von Ertragstoken basierend auf den empfangenen Energieinformationen und dem Smart-Contract (4) der Anlage (10) (S14); und
- Zuweisen eines Teils der Ertragstoken zu einer beteiligten Person (5) basierend auf den Beteiligungsinformationen (S15).

2. Verfahren nach Anspruch 1, **dadurch gekennzeichnet, dass** das Smart-Meter-Gateway-Netzwerk (N) mehrere Smart-Meter Gateways (2) aufweist, die an unterschiedlichen Orten installiert sind.

3. Verfahren nach Anspruch 1 oder 2, **dadurch gekennzeichnet, dass** die Smart-Meter Gateways (2) des Smart-Meter-Gateway-Netzwerks (N) durch eine kryptographisch gesicherte Netzwerkverbindung miteinander gekoppelt sind.

4. Verfahren nach einem der vorhergehenden Ansprüche, **dadurch gekennzeichnet, dass** das Smart-Meter-Gateway-Netzwerk (N) einen proof-of-stake-Konsensmechanismus zur Bestimmung, ob ein vorgeschlagener oder welcher der vorgeschlagenen Datenblöcke in die Kette von kryptographisch miteinander verknüpften Datensätzen eingebunden wird, aufweist.

5. Verfahren nach einem der vorhergehenden Ansprüche, **dadurch gekennzeichnet, dass** die Ertragstoken der jeweiligen Anlage (10) eindeutig zugeordnet werden.

6. Verfahren nach einem der vorhergehenden Ansprüche, **dadurch gekennzeichnet, dass** für einen definierten Abrechnungszeitraum Ertragstoken generiert und in einer der Anlage (10) zugeordneten Anlagenertrags-Wallet (10.1) abgelegt werden.

7. Verfahren nach Anspruch 6, **dadurch gekennzeichnet, dass** die Ertragstoken der Anlagenertrags-Wallet (10.1) auf Ertrags-Wallets (5.1) der beteiligten Personen (5) verteilt werden, und zwar basierend auf den Beteiligungsinformationen.

8. Verfahren nach einem der vorhergehenden Ansprüche, **dadurch gekennzeichnet, dass** einer beteiligten Person (5) gemäß deren Beteiligungsanteil Beteiligungstoken zugeordnet werden, die in einer Beteiligungs-Wallet (5.2) abgelegt werden.

9. Verfahren nach Anspruch 8, **dadurch gekennzeichnet, dass** die Ertrags-Wallet (5.1) und die Beteiligungs-Wallet (5.2) durch unterschiedliche Wallets gebildet werden.

10. Verfahren nach einem der vorhergehenden Ansprüche, **dadurch gekennzeichnet, dass** die Beteiligungsinformationen direkter Bestandteil des Smart-Contracts (4) sind oder der Smart-Contract Informationen enthält, die auf die Beteiligungsinformationen verweisen.

11. Verfahren nach einem der vorhergehenden Ansprüche, **dadurch gekennzeichnet, dass** der Smart-Contract (4) Anlagenparameter enthält, die die Energie erzeugende Anlage (10) charakterisieren und basierend auf denen das Berechnen der Ertragstoken erfolgt.

12. Verfahren nach Anspruch 11, **dadurch gekennzeichnet, dass** die Anlagenparameter Informationen über die Vergütung der erzeugten Energie, technische Anlagenparameter und/oder monetäre Anlagenparameter umfassen.

13. System zur verteilten Zuweisung von Erträgen einer Anlage (10) an mehrere beteiligte Personen umfassend ein Smart-Meter-Gateway-Netzwerk (N) mit mehreren Smart-Meter Gateways (2), wobei ein Smart-Meter Gateway (2) des Smart-Meter-Gateway-Netzwerks (N) mit einem Messaufnehmer (3) der Anlage (10) gekoppelt ist, wobei das System (1) dazu ausgebildet ist, die folgenden Abläufe durchzuführen:
- Abspeichern von Beteiligungsinformationen, die Informationen hinsichtlich der Beteiligung einer Person (5) enthalten, in einer Kette von kryptographisch miteinander verknüpften Datensätzen in dem Smart-Meter-Gateway-Netzwerk (N);
- Ablegen eines Smart-Contracts (4) in einer Kette von kryptographisch miteinander verknüpften Datensätzen in dem Smart-Meter-Gateway-Netzwerk (N), wobei der Smart-Contract eindeutig der Anlage (10) zugeordnet ist und zur Berechnung von Erträgen der Anlage (10) nötige Anlagenparameter enthält;
- Empfangen von durch die Anlage (10) produzierten Energiewerten durch zumindest ein Smart-Meter Gateway (2) von dem Messaufnehmer (3) der Anlage (10), wobei das Smart-Meter Gateway (2) Bestandteil des Smart-Meter-Gateway-Netzwerks (N) ist;
- Abspeichern der empfangenen Energiewerte in einer Kette von kryptographisch miteinander verknüpften Datensätzen in dem Smart-Meter-Gateway-Netzwerk (N);
- Berechnen von Ertragstoken basierend auf den erfassten Energiewerten und dem Smart-Contract (4) der Anlage (10); und
- Zuweisen eines Teils der Ertragstoken zu einer beteiligten Person (5) basierend auf den Beteiligungsinformationen.

14. System nach Anspruch 13, **dadurch gekennzeichnet, dass** eine Schnittstelle (7) zum Empfang von Beteiligungsinformationen vorgesehen ist.

15. System nach Anspruch 13 oder 14, **dadurch gekennzeichnet, dass** eine Schnittstelle (8) zur Weiterleitung von Ertragstoken von einer Anlagen-Wallet (10.1) auf Ertrags-Wallets (5.1) der beteiligten Personen (5) vorgesehen ist.

## Claims

1. A method for the distributed assignment of yields of a facility (10) to a plurality of participating persons (5) on the basis of a smart meter gateway network (N) comprising a plurality of smart meter gateways (2), said method comprising the steps of:
- storing participation information including information with regard to the participation of a person (5) in the facility (10) in a chain of data sets cryptographically linked to one another in the smart meter gateway network (N) (S10);
- storing a smart contract (4) in a chain of data sets cryptographically linked to one another in the smart meter gateway network (N), said smart contract (4) being uniquely allocated to the facility (10) and containing facility parameters necessary to calculate yields of the facility (10) (S11);
- receiving energy information with regard to energy values produced by the facility (10) by at least one smart meter gateway (2), said smart meter gateway (2) being a component of the smart meter gateway network (N) (S12);
- storing the received energy information or information derived therefrom in a chain of data sets cryptographically linked to one another in the smart meter gateway network (N) (S13);
- calculating yield tokens on the basis of the received energy information and the smart contract (4) of the facility (10) (S14); and
- assigning a part of the yield tokens to a participating person (5) on the basis of the participation information (S15).

2. The method according to claim 1, **characterized in that** the smart meter gateway network (N) comprises a plurality of smart meter gateways (2) installed at different locations.

3. The method according to claim 1 or 2, **characterized in that** the smart meter gateways (2) of the smart meter gateway network (N) are coupled to one another by a cryptographically secured network connection.

4. The method according to one of the previous claims, **characterized in that** the smart meter gateway network (N) implements a proof-of-stake consensus mechanism for determining whether a proposed data block or which of the proposed data blocks is included in the chain of data sets cryptographically connected to one another.

5. The method according to one of the previous claims, **characterized in that** the yield tokens are uniquely assigned to the respective facility (10).

6. The method according to one of the previous claims, **characterized in that** yield tokens are generated for a defined billing period and stored in a facility yield wallet (10.1) allocated to the facility (10).

7. The method according to claim 6, **characterized in that** the yield tokens of the facility yield wallet (10.1) are distributed to yield wallets (5.1) of the participating persons (5) on the basis of the participation information.

8. The method according to one of the previous claims, **characterized in that** participation tokens are allocated to a participating person (5) according to his/her participation share and are stored in a participation wallet (5.2).

9. The method according to claim 8, **characterized in that** the yield wallet (5.1) and the participation wallet (5.2) are formed by different wallets.

10. The method according to one of the previous claims, **characterized in that** the participation information is a direct component of the smart contract (4) or the smart contract contains information that refers to the participation information.

11. The method according to one of the previous claims, **characterized in that** the smart contract (4) contains facility parameters that characterize the energy producing facility (10) and on the basis of which the yield tokens are calculated.

12. The method according to claim 11, **characterized in that** the facility parameters comprise information about the remuneration of the generated energy, technical facility parameters and/or monetary facility parameters.

13. A system for the distributed assignment of yields of a facility (10) to a plurality of participating persons, comprising a smart meter gateway network (N) including a plurality of smart meter gateways (2), a smart meter gateway (2) of the smart meter gateway network (N) being coupled to a measuring sensor (3) of the facility (10), said system (1) being configured to carry out the operations of:
- storing participation information comprising information with regard to the participation of a person (5) in a chain of data sets cryptographically linked to one another in the smart meter gateway network (N);
- storing a smart contract (4) in a chain of data sets cryptographically linked to one another in the smart meter gateway network (N), said smart contract (4) being uniquely allocated to the facility (10) and containing facility parameters necessary to calculate yields of the facility (10);
- receiving energy values produced by the facility (10) via at least one smart meter gateway (2) from the measuring sensor (3) of the facility (10), said smart meter gateway (2) being a component of the smart meter gateway network (N);
- storing the received energy values in a chain of data sets cryptographically linked to one another in the smart meter gateway network (N);
- calculating yield tokens on the basis of the detected energy values and the smart contract (4) of the facility (10); and
- assigning a part of the yield tokens to a participating person (5) on the basis of the participation information.

14. The system according to claim 13, **characterized in that** an interface (7) for receiving participation information is provided.

15. The system according to claim 13 or 14, **characterized in that** an interface (8) for transferring yield tokens from a facility wallet (10.1) to yield wallets (5.1) of participating persons (5) is provided.

## Revendications

1. Procédé d'attribution répartie des rendements d'une installation (10) à plusieurs personnes impliquées (5) sur la base d'un réseau de passerelles de compteurs intelligents (N) comprenant plusieurs passerelles de compteurs intelligents (2), le procédé comprenant les étapes suivantes consistant à :
- mémoriser des informations d'implication, qui contiennent des informations concernant l'implication d'une personne (5) à l'installation (10), dans une chaîne d'ensembles de données liés cryptographiquement entre eux dans le réseau de passerelles de compteurs intelligents (N) (S10) ;
- stocker un contrat intelligent (4) dans une chaîne d'ensembles de données liés cryptographiquement entre eux dans le réseau de passerelles de compteurs intelligents (N), le contrat intelligent (4) étant associé de manière univoque à l'installation (10) et contenant des paramètres d'installation nécessaires au calcul des rendements de l'installation (10) (S11);
- recevoir, par au moins une passerelle de compteurs intelligents (2), des informations d'énergie concernant les valeurs énergétiques produites par l'installation (10), la passerelle de compteurs intelligents (2) faisant partie du réseau de passerelles de compteurs intelligents (N) (S12) ;
- mémoriser les informations d'énergie reçues ou des informations dérivées de celles-ci dans une chaîne d'ensembles de données liés cryptographiquement entre eux dans le réseau de passerelles de compteurs intelligents (N) (S13) ;
- calculer des jetons de rendements sur la base des informations d'énergie reçues et du contrat intelligent (4) de l'installation (10) (S14) ; et
- attribuer une partie des jetons de rendements à une personne impliquée (5) sur la base des informations d'implication (S15).

2. Procédé selon la revendication 1,
**caractérisé en ce que** le réseau de passerelles de compteurs intelligents (N) comprend plusieurs passerelles de compteurs intelligents (2) installées à différents endroits.

3. Procédé selon la revendication 1 ou 2,
**caractérisé en ce que** les passerelles de compteurs intelligents (2) du réseau de passerelles de compteurs intelligents (N) sont couplées entre elles par une connexion réseau sécurisée cryptographiquement.

4. Procédé selon l'une des revendications précédentes,
**caractérisé en ce que** le réseau de passerelles de compteurs intelligents (N) comprend un mécanisme de consensus de preuve d'enjeu pour déterminer si un bloc de données proposé ou quel des blocs de données proposés est intégré dans la chaîne d'ensembles de données liés cryptographiquement entre eux.

5. Procédé selon l'une des revendications précédentes,
**caractérisé en ce que** les jetons de rendements sont attribués de manière univoque à l'installation (10) respective.

6. Procédé selon l'une des revendications précédentes,
**caractérisé en ce que** des jetons de rendements sont générés pour une période de facturation définie et sont stockés dans un portefeuille de rendements d'installation (10.1) associé à l'installation (10).

7. Procédé selon la revendication 6,
**caractérisé en ce que** les jetons de rendements du portefeuille de rendements d'installation (10.1) sont répartis sur des portefeuilles de rendements (5.1) des personnes impliquées (5), et ce sur la base des informations d'implication.

8. Procédé selon l'une des revendications précédentes,
**caractérisé en ce que** des jetons d'implication sont associés à une personne impliquée (5) en fonction de sa part d'implication, qui sont stockés dans un portefeuille d'implication (5.2).

9. Procédé selon la revendication 8,
**caractérisé en ce que** le portefeuille de rendements (5.1) et le portefeuille d'implication (5.2) sont formés par des portefeuilles différents.

10. Procédé selon l'une des revendications précédentes,
**caractérisé en ce que** les informations d'implication font directement partie du contrat intelligent (4), ou le contrat intelligent contient des informations qui renvoient aux informations d'implication.

11. Procédé selon l'une des revendications précédentes,
**caractérisé en ce que** le contrat intelligent (4) contient des paramètres d'installation qui caractérisent l'installation de production d'énergie (10) et sur lesquels se base le calcul des jetons de rendements.

12. Procédé selon la revendication 11,
**caractérisé en ce que** les paramètres d'installation comprennent des informations sur la rémunération de l'énergie produite, des paramètres d'installation techniques et/ou des paramètres d'installation monétaires.

13. Système pour l'attribution répartie de rendements d'une installation (10) à plusieurs personnes impliquées, comprenant un réseau de passerelles de compteurs intelligents (N) avec plusieurs passerelles de compteurs intelligents (2), une passerelle de compteurs intelligents (2) du réseau de passerelles de compteurs intelligents (N) étant couplée à un capteur de mesure (3) de l'installation (10), le système (1) étant réalisé pour effectuer les opérations suivantes :
- mémoriser des informations d'implication, qui contiennent des informations concernant l'implication d'une personne (5), dans une chaîne d'ensembles de données liés cryptographiquement entre eux dans le réseau de passerelles de compteurs intelligents (N) ;
- stocker un contrat intelligent (4) dans une chaîne d'ensembles de données liés cryptographiquement entre eux dans le réseau de passerelles de compteurs intelligents (N), le contrat intelligent étant associé de manière univoque à l'installation (10) et contenant des paramètres d'installation nécessaires au calcul des rendements de l'installation (10) ;
- recevoir, par au moins une passerelle de compteurs intelligents (2), des valeurs énergétiques produites par l'installation (10) en provenance du capteur de mesure (3) de l'installation (10), la passerelle de compteurs intelligents (2) faisant partie du réseau de passerelles de compteurs intelligents (N) ;
- mémoriser les valeurs énergétiques reçues dans une chaîne d'ensembles de données liés cryptographiquement entre eux dans le réseau de passerelles de compteurs intelligents (N) ;
- calculer des jetons de rendements sur la base des valeurs énergétiques détectées et du contrat intelligent (4) de l'installation (10) ; et
- attribuer une partie des jetons de rendements à une personne impliquée (5) sur la base des informations d'implication.

14. Système selon la revendication 13,
**caractérisé en ce qu'**il est prévu une interface (7) pour recevoir des informations d'implication.

15. Système selon la revendication 13 ou 14,
**caractérisé en ce qu'**il est prévu une interface (8) pour transmettre des jetons de rendements d'un portefeuille d'installation (10.1) à des portefeuilles de rendements (5.1) des personnes impliquées (5).
